# EUROPEAN PATENT APPLICATION

(11) **EP 1 692 986 A1**
(43) Date of publication of application: **23.08.2006**
(21) Application number: 05010630.1
(22) Date of filing: 17.05.2005
(51) Int. Cl.: A47J 36/04

(54) **Cookware**

(30) Priority: 22.02.2005 KR 2005004649 U
(71) Applicant: Kim, Myung-suk, Yesan-goon, Choongcheongnam-do (KR)
(72) Inventor: Kim, Myung-suk, Yesan-goon, Choongcheongnam-do (KR)
(74) Representative: TBK-Patent

(57) **Abstract**

A cookware (10a), in which the overall surface of a main body (20) made of metal is hard-anodized for preventing corrosion, a natural stone (40) is placed from the bottom surface of the main body to a designated height of the main body for improving a thermal insulation property and discharging mineral matters, and hand grips (50) are riveted at the outer surface of the upper end of the main body (20), which is not provided with the natural stone (40), for allowing a user to easily lift the cookware. The cookware includes a main body having a space for containing food to be cooked, and provided with a plurality of installation holes (22) formed through the upper end thereof; a coating layer (30) obtained by hard-anodizing the overall surface of the main body for preventing the main body from corroding and improving thermal conductivity and strength of the main body; a natural stone (40) placed in the main body such that the natural stone contacts the bottom surface of the main body to a portion of the main body below the installation holes (22) for transferring external heat or mineral matters to the food; and hand grips (50) integrally connected to the main body by rivets (52) inserted into the installation holes after the coating layer (30) is formed. The hard-anodizing treatment improves the strength of the main body, prevents the main body (20) from being scratched and the natural stone (40) from being separated from the main body, and improves the strength of the hand grips (50).

## Description

### BACKGROUND OF THE INVENTION

### Field of the Invention

The present invention relates to a cookware, and more particularly to a cookware, in which the overall surface of a main body made of metal is hard-anodized for preventing corrosion, a natural stone is placed from the bottom surface of the main body to a designated height of the main body for improving a thermal insulation property and discharging mineral matters, and hand grips are riveted at the outer surface of the upper end of the main body, which is not provided with the natural stone, for allowing a user to easily lift the cookware.

### Description of the Related Art

Generally, cookwares, which are used in restaurants or homes, are made of metal.

The cookwares have a high thermal conductivity, but have a deteriorated thermal insulation property. Accordingly, a cookware having a novel structure in which a stone layer is stacked on the inner surface thereof has been proposed.

The above cookware absorbs heat applied from the outside, uniformly transfers the heat to the inside thereof using the stone layer, and conserves the heat. When rice is cooked in the cookware, the rice in the cookware is well-steamed and users can enjoy nice taste of the rice.

Since the stone layer is stacked throughout the overall inner surface of the above cookware, holes must be formed through the stone layer for installing hand grips through the cookware. When the holes are formed through the stone layer, the stone layer is easily broken and it is difficult to make holes for installation of the hand grips through the stone layer.

Further, the above cookware is made of a metal, thus requiring a hard anodizing treatment for preventing corrosion. In the hard anodizing treatment, since the holes for installation of the hand grips cannot be made through the stone layer, the edge of the cookware is picked up with electrical connection clamps so that current is applied to the cookware in the air. Accordingly, a portion of the cookware, which is picked up with the electrical connection clamps, is not hard-anodized.

### SUMMARY OF THE INVENTION

Therefore, the present invention has been made in view of the above problems, and it is an object of the present invention to provide a cookware having stone, in which the overall surface of a main body is hard-anodized by inserting electrical connection clamps into installation holes formed through the upper end of the main body and applying current thereto, a natural stone is placed in the main body such that the natural stone contacts the bottom surface of the main body to a portion of the main body below the installation holes, and hand grips are connected to the installation holes using rivets so that a user may easily lift the cookware.

In accordance with the present invention, the above and other objects can be accomplished by the provision of a cookware having stone comprising: a main body having a space for containing food to be cooked, and provided with a plurality of installation holes formed through the upper end thereof; a coating layer obtained by hard-anodizing the overall surface of the main body for preventing the main body from corroding and improving thermal conductivity and strength of the main body; a natural stone placed in the main body such that the natural stone contacts the bottom surface of the main body to a portion of the main body below the installation holes for transferring external heat or mineral matters to the food; and hand grips integrally connected to the main body by rivets inserted into the installation holes after the coating layer is formed.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a perspective view of a cookware having stone in accordance with a first embodiment of the present invention;
FIG. 2 is a sectional view of the cookware in accordance with the first embodiment of the present invention;
FIG. 3 is a perspective view of a cookware having stone in accordance with a second embodiment of the present invention; and
FIG. 4 is a perspective view of a cookware having stone in accordance with a third embodiment of the present invention.

### DESCRIPTION OF THE PREFERRED EMBODIMENTS

Now, preferred embodiments of the present invention will be described in detail with reference to the annexed drawings.

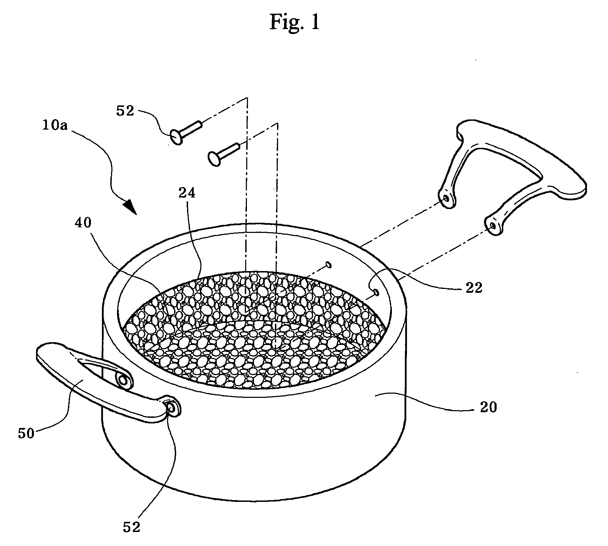

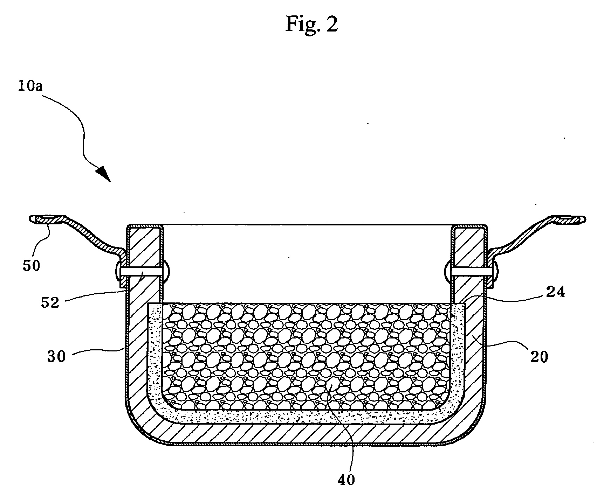

FIG. 1 is a perspective view of a cookware having stone in accordance with a first embodiment of the present invention, and FIG. 2 is a sectional view of the cookware in accordance with the first embodiment of the present invention.

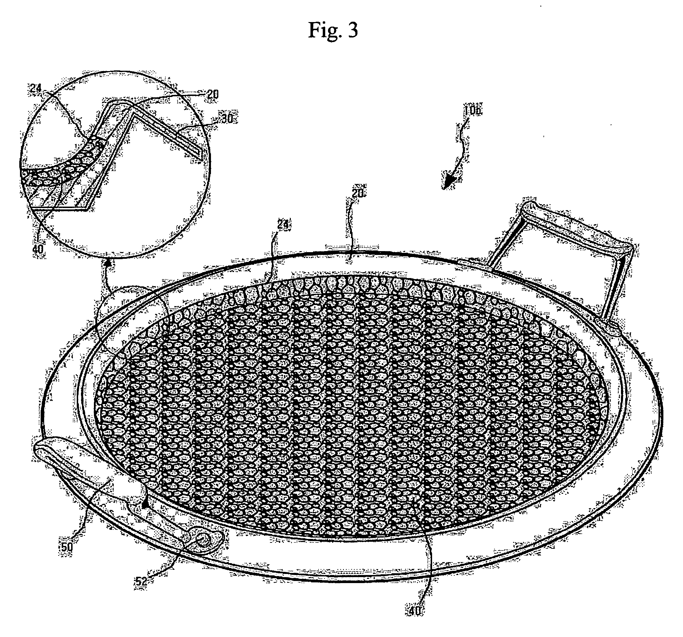

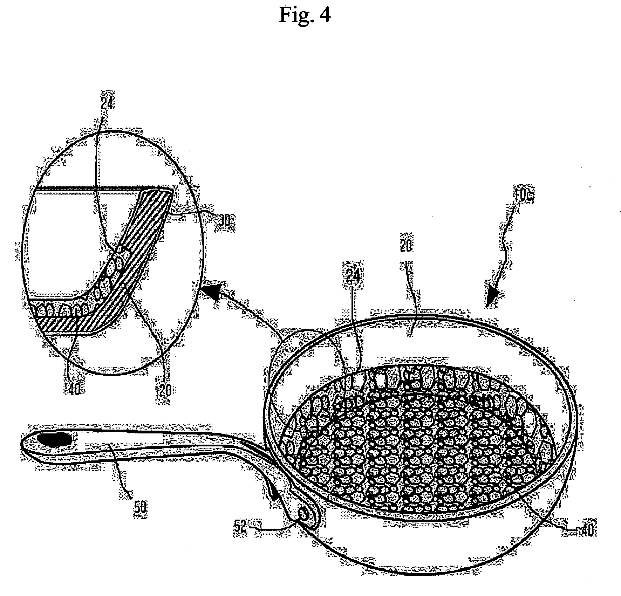

FIGS. 3 and 4 are perspective views of each of cookwares having stone in accordance with other embodiments of the present invention.

As shown in FIGS. 1 and 2, the cookware 10a having stone in accordance with the first embodiment of the present invention comprises a main body 20 having a space for containing food to be cooked, made of metal, and provided with a plurality of installation holes 22 formed through the upper end thereof, a coating layer 30 obtained by hard-anodizing the overall surface of the main body 20 for preventing the main body 20 from corroding and improving thermal conductivity and strength of the main body 20, a natural stone 40 contacting the bottom surface of the main body 20 to a portion of the main body 40 below the installation holes 22 for transferring external heat or mineral matters to the food, and hand grips 50 integrally connected to the main body 20 by rivets 52 inserted into the installation holes 22 after the coating layer 30 of the main body 20 is formed.

Generally, the cookware 10a is a cooking pot.

As shown in FIGS. 1 and 2, in order to contain the food, the main body 20 of the cookware 10a is provided with an opened upper end surface, and has the space formed therein.

Further, the main body 20 is made of metal.

Preferably, the main body 20 is made of aluminum having a comparatively low weight.

A plurality of the installation holes 22 are formed through the upper end of the main body 20 of the cookware 10a

Preferably, a pair of the installation holes 22 are formed through each of opposite positions of the upper end of the main body 20.

In order to prevent the main body 20 from corroding and improve thermal conductivity and strength of the main body 20, the coating layer 30 is formed on the overall surface of the main body 40 by hard-anodizing the surface of the main body 40.

The above hard-anodizing treatment (hard film treatment) refers to a process for coating the surface of the main body 20 made of aluminum with an oxidation film.

That is, in the hard-anodizing treatment, an artificial oxidation film is formed on the surface of the main body 20 by applying electricity to a material which forms a stable oxidation film in the atmosphere, such as aluminum or titanium, in a proper oxidizing solution.

The reason that the main body 20 is made of aluminum is that the hard-anodizing treatment is performed on the surface of the main body 20.

The conditions of the coating layer 30 obtained by the hard-anodizing treatment are different according to kind and concentration of an electrolyte solution, voltage, characteristics of current, current density, temperature, and electrolysis time, thereby being set suitably for the quality and processed state of the main body 20 made of aluminum. A proper one selected from well-known methods of the hard-anodizing treatment is performed. Preferably, the coating layer 30 has a thickness of more than 50µm.

Here, in order to electrically connect the main body 20 in the hard-anodizing treatment, electrical connection clamps (not shown) are generally used. By forming the coating layer 30 under the condition that the electrical connection clamps are fixedly inserted into the installation holes 22, it is possible to form the coating layer 30 on the overall surface of the main body 20 differently from a conventional cookware.

Then, the natural stone 40 is placed in the main body 20.

Here, the natural stone 40 has the same shape as that of the inner surface of the main body 20 so that the natural stone 40 and the inner surface of the main body 20 contact each other, and the connection between the natural stone 40 and the inner surface of the main body 20 is achieved by a well-known method.

The natural stone 40 is placed on the inner surface of the main body 20 such that the natural stone 40 contacts the bottom surface of the main body 20 to the portion of the main body 40 at a designated height, i.e., the portion of the main body 40 below the installation holes 22.

Thereby, the hand grips 50 are installed at the installation holes 22 of the main body 20.

The natural stone 40 is elvan or granite, which has a high thermal insulation property and discharges various mineral matters or far-infrared rays.

The far-infrared rays are invisible rays having a wavelength of 5~25 microns, and it is known that a large amount of the far-infrared rays have various advantages.

The far-infrared rays having a long wavelength deeply penetrate an object so that molecules of the object easily vibrate and emit heat.

By means of the above function, the main body 20 receives external heat, and easily boils food contained therein deeply due to the far-infrared rays emitted from the natural stone 40.

A protrusion 24 is formed on a portion of the main body 20 corresponding to the edge of the natural stone 40 so that the edge of the natural stone 40 is not protruded from the inner wall of the main body 20.

Further, the hand grips 50 are installed on the main body 20.

Here, the hand grips 50 are installed at the upper end of the main body 20, on which the natural stone 40 is not placed, thus not damaging the natural stone 40.

Since the hand grips 50 are connected to the main body 20 through the installation holes 22, at least one pair of the hand grips 50 is firmly connected to the main body 20.

When the hand grips 50 are connected to the installation holes 22 of the main body 20 using conventional bolts and nuts, the bolts and nuts are loosened after a long period of time has elapsed, thus being frequently tightened up.

Accordingly, the hand grips 50 of the cookware 10a of the present invention are connected to the main body 20 using the rivets 52.

That is, the rivets 52 are inserted into the corresponding installation holes 22 and pass through the lower ends of the corresponding hand grips 50, and then, protruded ends of the rivets 52 are hit by a hammer. Thereby, since the diameters of the protruded ends of the rivets 52 are increased and the lengths of the rivets 52 are decreased, the hand grips 50 are firmly connected to the main body 20 by the rivets 52.

FIG. 3 is a perspective view of a cookware having stone in accordance with a second embodiment of the present invention. The cookware 10b in accordance with the second embodiment is a griddle.

The structure of the cookware 10b of the second embodiment, in which the overall surface of the main body 20 is hard-anodized, the natural stone 40 is placed in the main body 20, and the hand grips 50 are attached to the main body 20, is the same as that of the cookware 10a of the first embodiment, and a detailed description thereof will thus be omitted Further, some parts in the second embodiment are substantially the same as those in the first embodiment and thus denoted by the same reference numerals even though they are depicted in different drawings.

FIG. 4 is a perspective view of a cookware having stone in accordance with a third embodiment of the present invention. The cookware 10c in accordance with the third embodiment is a frying pan.

The structure of the cookware 10c of the third embodiment, in which the overall surface of the main body 20 is hard-anodized, the natural stone 40 is placed in the main body 20, and the hand grips 50 are attached to the main body 20, is the same as those of the cookwares 10a and 10b of the first and second embodiments, and a detailed description thereof will thus be omitted. Further, some parts in the third embodiment are substantially the same as those in the first and second embodiments and thus denoted by the same reference numerals even though they are depicted in different drawings.

As apparent from the above description, the present invention provides a cookware having stone, in which natural stone is placed in a main body made of metal, thereby having an improved thermal insulation property and discharging a large quantity of mineral matters to facilitate the cooking of food contained therein.

Since the overall surface of the main body of the cookware is hard-anodized, it is possible to prevent the cookware from corroding.

Hand grips are connected to the upper end of the main body of the cookware, on which the natural stone is not placed, under the condition that the natural stone is placed in the main body, it is possible to allow a user to easily lift the main body having a comparatively high weight.

Particularly, the hard-anodizing treatment has several effects, as follows.

First, the strength of the main body is improved by hard-anodizing the main body made of metal, such as aluminum, having a low strength.

Second, a coating layer obtained by the hard-anodizing treatment prevents the main body from being scratched.

Third, the hard-anodizing treatment firmly fixes the natural stone into the main body.

Fourth, since positions of the main body, to which the hand grips are connected, are hard-anodized, the strength of the hand grips for moving the main body having a high weight due to the installation of the natural stone is improved.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

A cookware, in which the overall surface of a main body made of metal is hard-anodized for preventing corrosion, a natural stone is placed from the bottom surface of the main body to a designated height of the main body for improving a thermal insulation property and discharging mineral matters, and hand grips are riveted at the outer surface of the upper end of the main body, which is not provided with the natural stone, for allowing a user to easily lift the cookware. The cookware includes a main body having a space for containing food to be cooked, and provided with a plurality of installation holes formed through the upper end thereof; a coating layer obtained by hard-anodizing the overall surface of the main body for preventing the main body from corroding and improving thermal conductivity and strength of the main body; a natural stone placed in the main body such that the natural stone contacts the bottom surface of the main body to a portion of the main body below the installation holes for transferring external heat or mineral matters to the food; and hand grips integrally connected to the main body by rivets inserted into the installation holes after the coating layer is formed. The hard-anodizing treatment improves the strength of the main body, prevents the main body from being scratched and the natural stone from being separated from the main body, and improves the strength of the hand grips.

## Claims

1. A cookware comprising:
a main body having a space for containing food to be cooked, and provided with a plurality of installation holes formed through the upper end thereof;
a coating layer obtained by hard-anodizing the overall surface of the main body for preventing the main body from corroding and improving thermal conductivity and strength of the main body;
a natural stone placed in the main body such that the natural stone contacts the bottom surface of the main body to a portion of the main body below the installation holes for transferring external heat or mineral matters to the food; and
hand grips integrally connected to the main body by rivets inserted into the installation holes after the coating layer is formed.
